# EUROPEAN PATENT APPLICATION

(11) **EP 1 736 913 A1**
(43) Date of publication of application: **27.12.2006**
(21) Application number: 06004331.2
(22) Date of filing: 03.03.2006
(51) Int. Cl.: G06K 9/68

(54) **Information processing apparatus having learning function for character dictionary**

(30) Priority: 24.06.2005 JP 2005185178
(71) Applicant: KABUSHIKI KAISHA TOSHIBA, Tokyo 105-8001 (JP)
(72) Inventor: Nakao, Akihiro, Minato-ku Tokyo 105-8001 (JP); Irie, Bunpei, Minato-ku Tokyo 105-8001 (JP); Ariyoshi, Shunji, Minato-ku Tokyo 105-8001 (JP); Horiuchi, Hideo, Minato-ku Tokyo 105-8001 (JP); Akagi, Takuma, Minato-ku Tokyo 105-8001 (JP); Aoki, Yasuhiro, Minato-ku Tokyo 105-8001 (JP); Hamamura, Tomoyuki, Minato-ku Tokyo 105-8001 (JP); Maeda, Masaya, Minato-ku Tokyo 105-8001 (JP)
(74) Representative: Kramer - Barske - Schmidtchen

(57) **Abstract**

A search processing section (102) searches information stored in an address database, using a first character series, e.g., a postal code input through an input device (13) as a search key, for a second character series corresponding to an address. A character recognition processing section (104) performs character recognition with respect to a predetermined area in the image, using a character dictionary stored in a character dictionary storage section (103), and generates candidates for a character series including a name or designation, a postal code, an address, etc. A character image selection processing section (105) selects a character series corresponding to the searched second character series from the generated candidates. A character image storage section (106) stores correlation between each of the characters constituting the selected character series and a character image thereof. A character dictionary learning processing section (107) performs a learning process with respect to the character dictionary, based on the stored correlation between each character and the character image thereof.

## Description

The present invention relates to an information processing apparatus, which captures an image of a letter on which address information is written, and performs a character recognition process, and particularly to an information processing apparatus, which has a learning function for a character dictionary, etc., for use in a character recognition process.

In the character recognition process of recognizing characters written on postal matter, such as a letter, generally, a character pattern separated out from an image is collated with a character dictionary created in advance. Then, the most probable one of the letters recorded in the character dictionary is determined as a result of the character recognition.

To create a character dictionary, one or a plurality of character images are prepared for each character, and dictionary learning is performed by means of the character images. The more the number of character images prepared for each character is, the more advanced character dictionary can be prepared. When the character dictionary is to be improved, a new character image is added or a part of the character images is replaced with a new one, and then the dictionary learning is carried out again.

To create character images, the operator is required to designate characters, one by one, from an image including a character string, and store a character image corresponding to the designated character. These processes are repeatedly performed manually. As the character recognition processing technique has been advanced to a certain extent, a method is employed, in which characters are automatically separated from an image by means of a tool, character images are displayed on a monitor screen, and the operator designates a character string corresponding to the character images.

For example, Jpn. Pat. Appln. KOKAI Publication No. 9-57203 discloses as follows: when a character recognition apparatus rejects a letter, the operator inputs characters of a character pattern written on the rejected letter and then the character dictionary is renewed based on the correlation between the character pattern and a correct character code. Further, Jpn. Pat. Appln. KOKAI Publication No. 9-57204 discloses as follows: when a character recognition apparatus rejects a letter, the operator inputs characters of a character pattern of the destination written on the rejected letter and then the destination knowledge database is renewed based on the correlation between the character pattern of the destination and a correct destination code.

According to the conventional art, to create a character dictionary for use in character recognition, it is necessary to first separate a plurality of character images from the image on a letter. Thereafter, the operator must input a series of correct characters one by one for each of the character images. This process puts a heavy workload on the operator, and requires much time and cost for the operation. Further, it is difficult to improve the capacity of the knowledge database only by the learning process based on the information input by the operator.

It is thus desired to provide an information processing apparatus, which performs a high-performance recognition process, while reducing the workload of the operator.

According to one aspect of the present invention, there is provided an information processing apparatus which captures a letter image bearing address information and performs a character recognition process. The apparatus comprises an address information storage section which stores information relating to addresses for use in description of a letter, a search processing section which searches the information stored in the address information storage section, using a first character series as a search key, for a second character series corresponding to an address, a character dictionary storage section which stores a character dictionary indicative of correlation between each of characters used in the letter and a character image thereof, a character recognition processing section which performs character recognition with respect to a predetermined area in the image, using the character dictionary stored in the character dictionary storage section, and generates candidates for a character series including at least an address, a character image selection processing section which selects a character series corresponding to the second character series searched by the search processing section from the candidates generated by the character recognition processing section, and a character dictionary learning processing section which performs a learning process with respect to the character dictionary stored in the character dictionary storage section, based on correlation between each of characters constituting the character series selected by the character image selection processing section and a character image thereof.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the appearance of a sorting machine used in common to all embodiments of the present invention;
FIG. 2 is a diagram schematically showing the configuration of the sorting machine shown in FIG. 1;
FIG. 3 is a block diagram showing the configuration of a system according to a first embodiment of the present invention, which performs automatic learning for a character dictionary to recognize destination information written on postal matter based on character series input by the operator;
FIG. 4 is a diagram showing a first example of information registered in an address database;
FIG. 5 is a diagram showing a second example of information registered in an address database;
FIG. 6 is a diagram showing an example of a letter image;
FIG. 7 is a diagram showing that there are a plurality of character-separation candidates for a line of characters;
FIG. 8 is a diagram showing an example of character-separation candidates and results of character recognition, which are obtained when a character recognition processing section processes a line of the destination address;
FIG. 9 is a diagram showing that a plurality of character images, which fall within different categories, are registered in a character dictionary in association with one character code;
FIG. 10 is a flowchart showing an operation of the system according to the first embodiment of the present invention;
FIG. 11 is a flowchart showing a detailed process of step S18 (character learning process) in FIG. 10;
FIG. 12 is a block diagram showing the configuration of a system according to a second embodiment of the present invention, which performs automatic learning for a character dictionary to recognize destination information written on postal matter without any teaching by the operator;
FIG. 13 is a diagram showing an address database which enables an address search using a destination name as a search key;
FIG. 14 is a diagram showing an address database which enables an address search using a phone number as a search key;
FIG. 15 is a flowchart showing an operation of the system according to the second embodiment of the present invention;
FIG. 16 is a block diagram showing the configuration of a system according to a third embodiment of the present invention, which performs automatic learning for a standard position of a destination information description area on postal matter based on character series input by the operator;
FIG. 17 is a diagram showing an example of a process of estimating a destination description range;
FIG. 18 is a diagram showing that a destination information description area is detected by combining an area of a destination postal code line and an area of a destination address line;
FIG. 19 is a flowchart showing an operation of the system according to the third embodiment of the present invention;
FIG. 20 is a block diagram showing the configuration of a system according to a fourth embodiment of the present invention, which performs automatic learning for a standard position of a sender address information description area and a destination information description area on postal matter, with respect to each sender, based on character series input by the operator;
FIG. 21 is a diagram showing that specified companies are respectively assigned exclusive postal codes;
FIG. 22 is a diagram showing an address database which enables an address search using a sender's name as a search key;
FIG. 23 is a diagram showing a flow of searching an address database for the address information based on the postal code information of a sender and a recipient input by the operator;
FIG. 24 is a diagram showing various information stored in a sender-specific letter format information storage section;
FIG. 25 is a diagram showing that a destination information description area is detected by combining an area of a destination postal code line and an area of a destination address line; and
FIG. 26 is a flowchart showing an operation of the system according to the fourth embodiment of the present invention.

Embodiments of the present invention will be described below with reference to the drawings.

Each of the following embodiments shows an example of an information processing apparatus which processes letters onto which destination and the like are written in conformity to the Japanese postal description format; however, such apparatus may be modified to an information processing apparatus which processes letters onto which destination and the like are written in conformity to a different postal description format used in, e.g., USA, Korea, Germany, France, or Italy.

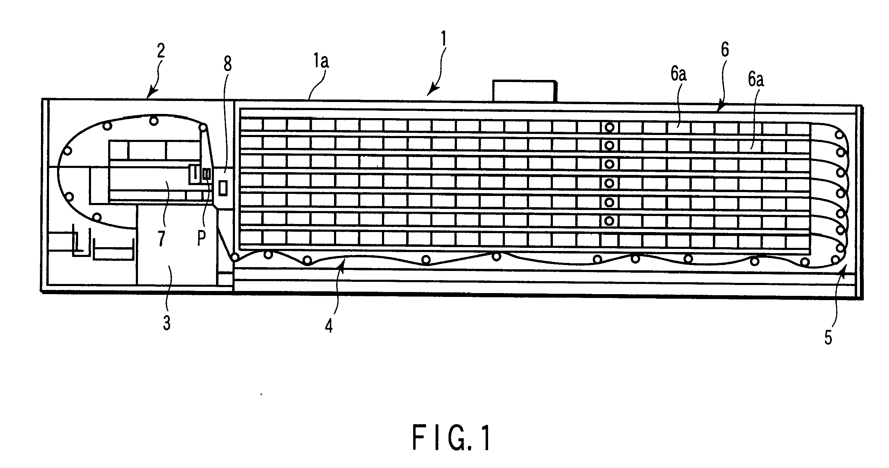

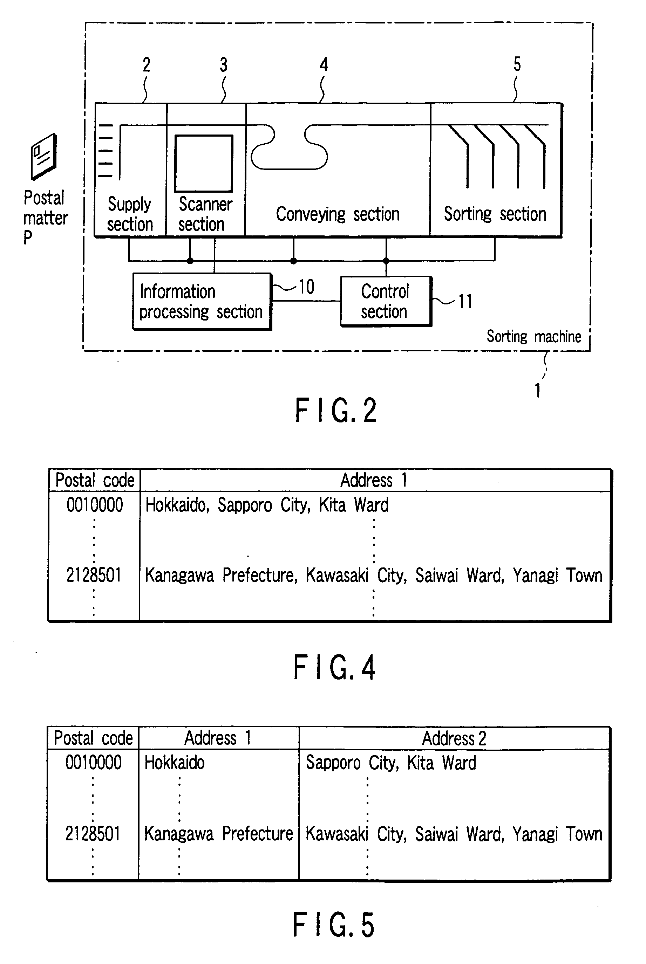

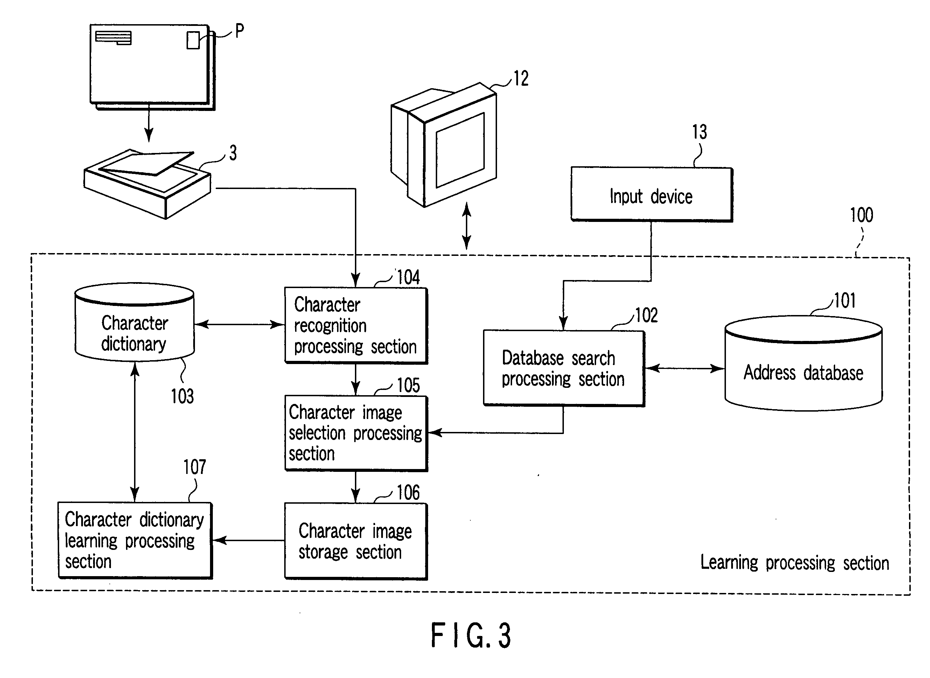

FIG. 1 is an external view of a sorting machine 1 used in common to all embodiments of the present invention. FIG. 2 is a diagram schematically showing the configuration of the sorting machine 1. The sorting machine 1 has a large box-shaped sorting machine main body 1a. The sorting machine 1 reads information written on postal matter (letter) P to recognize a destination area or an affixed seal area on the basis of the read content. Then, based on the result of the recognition, the sorting machine 1 sorts the postal matter P into the corresponding destination.

The sorting machine main body 1a includes a supply section 2, a scanner section 3, a conveying section 4, a sorting section 5, and a housing section 6. The postal matter P from the supply section 2 is conveyed on a conveying path, and guided to the housing section 6 sequentially through the conveying section 4 and the sorting section 5.

The supply section 2 has a placement table 7 on which the postal matter P is placed and a pickup section 8 which picks up the postal matter P from the placement table one by one and feeds it to the conveying path. The scanner section 3 optically reads the entire image of each piece of the postal matter P conveyed on the conveying path and generates image information. The conveying section 4 conveys the postal matter P, which has passed through the scanner section 3, to the sorting section 5. The housing section 6 has a large number of housing pockets 6a in which sorted pieces of the postal matter P are housed. The sorting section 5 sorts each piece of the postal matter P fed by the conveying section 4, to one of the housing pockets 6a on the basis of the result of recognition of the image information from the scanner section 3 as will be described below.

The scanner section 3 is reading means for optically scanning the postal matter P to carry out a photoelectric conversion to read information from the sheet as a pattern signal. The scanner section 3 includes, for example, a light source that irradiates the postal matter with light and a self-scanning CCD image sensor that receives reflected light and converts it into an electric signal. An output from the scanner section 3 is supplied to a recognition section of an information processing section 10.

In the sorting machine 1, the supply section 2, the scanner section 3, the conveying section 4, the sorting section 5 and the information processing section 10 are connected to a control section 11. The control section 11 controls the operation of the whole sorting machine 1. For example, the control section 11 reads out sort specification data corresponding to the result of recognition (or determination) in the information processing section 10 with reference to a sort specification table stored in a memory (not shown). The control section 11 then causes the postal matter P to be conveyed to one of the housing pockets 6a which corresponds to the read-out sort specification data (the address of this housing pocket 6a).

Further, the control section 11 controls the whole conveying system by using a driver (not shown) to drive a conveying mechanism section (not shown), such as the conveying path.

The following are detailed explanation of the structure and operation of each embodiment to efficiently realize learning for a character dictionary or the like provided in the information processing section 10.

### <First Embodiment>

The first embodiment will now be described.

FIG. 3 is a block diagram showing the configuration of a system according to the first embodiment of the present invention, which performs automatic learning for a character dictionary to recognize destination information written on postal matter based on character series input by the operator.

This system includes the scanner section 3 to capture a letter image of postal matter P, a display 12 to display the captured image, an input device 13 through which the operator inputs data and a learning processing section 100.

The learning processing section 100 embodies the information processing apparatus 10 described above. It includes an address database 101, a database search processing section 102, a character dictionary storage section 103, a character recognition processing section 104, a character image selection processing section 105, a character image storage section 106, and a character dictionary learning processing section 107.

The address database 101 stores information on addresses for use in description on the postal matter P.

The database search processing section 102 uses a first character series (e.g., a name or designation, phone number, postal code or the like) input through the input device 13 as a search key, and searches the information stored in the address database 101 for a second character series corresponding to an address.

The character dictionary storage section 103 stores a character dictionary indicative of the correlation between each of the characters for use in description on the postal matter P and a character image corresponding to the character. In the character dictionary, a plurality of different kinds of character images can be registered in association with one character.

The character recognition processing section 104 uses the character dictionary stored in the character dictionary storage section 103 to perform character recognition of a specified area in an image, and generates candidates for character series respectively corresponding to the name or designation, the phone number, the postal code, the address, etc.

The character image selection processing section 105 selects a character series corresponding to the second character series searched by the database search processing section 102 from the candidates generated by the character recognition processing section 104. More specifically, the character image selection processing section 105 first selects a character series corresponding to the first character series input through the input device 13 from the candidates generated by the character recognition processing section 104, and then selects a character series corresponding to the second character series from the candidates for a line adjacent to the line of the selected character series in the image.

The character image storage section 106 stores character images in association with the respective characters constituting a character series selected by the character image selection processing section 105.

The character dictionary learning processing section 107 performs learning for the character dictionary stored in the character dictionary storage section 103 based on the correlation between the characters stored in the character image storage section 106 and the associated character images.

A detailed process in the system having the above functions will now be described.

The letter image captured by the scanner section 3 is subjected to necessary data processing, and then displayed on the screen of the display 12.

The operator inputs a part of the destination information on the letter image, for example, postal code information, through the input device 13. The input information is sent to the database search processing section 102 in the learning processing section 100. The database search processing section 102 searches the address database 101 using the input information as a search key.

FIGS. 4 and 5 show examples of information registered in the address database. In the example shown in FIG. 4, address information corresponding to the respective postal codes is registered. The address information corresponding to a postal code, from the prefecture name to the town name, is handled as a group of data. There may be a case where the destination address includes the prefecture name and a case where the destination address does not include the prefecture name and begins with the city, town or village name. To deal with both cases, the prefecture name information and the city, town or village name information may be handled as distinct data, as shown in FIG. 5. In this case, if "2128501" is input as postal code information, the database search processing section 102 obtains two pieces of data "Kanagawa Prefecture, Kawasaki City, Saiwai Ward, Yanagi Town" and "Kawasaki City, Saiwai Ward, Yanagi Town" as the database search result.

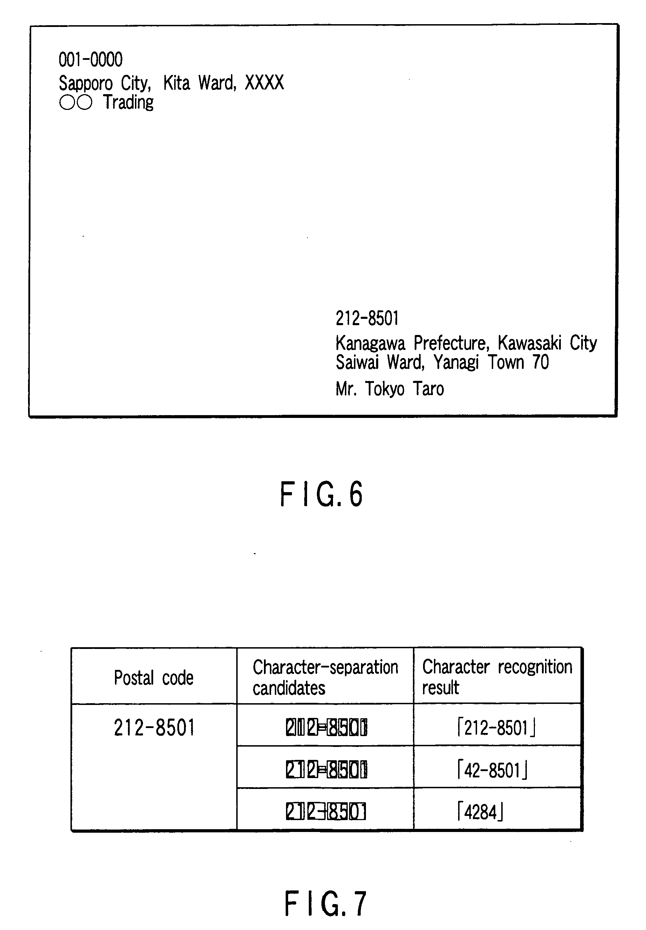

The character recognition processing section 104 separates the letter image captured by the scanner section 3 into character lines and character candidates, and recognizes the respective character candidates with reference to the character dictionary stored beforehand in the character dictionary storage section 103. FIG. 6 shows an example of the letter image.

According to an example shown in FIG. 6, destination information and the like are described in conformity to the Japanese postal description format. In each of a sender address information description area and a destination information description area on postal matter, (i) postal code, (ii) address (thoroughfare, street number, etc.), (iii) name or designation are described in this order from the top of the description area. In the United States, Europe, and the like, alternatively, (iii) name or designation, (ii) address (thoroughfare, street number, etc.), (i) postal code are generally described in this order from the top of the description area (not shown). In either case, the line of the postal code and the line of the address are adjacent each other, while the line of the name or designation and the line of the address are adjacent each other.

In the character recognition processing section 104, there are a plurality of character candidates separated from a line, as shown in FIG. 7. However, since the information that the operator input through the input device 13 is necessarily present in the image, it is natural that the character candidate having the recognition result that is the same as the input information is present. For example, the operator inputs, through the input device 13, the destination postal code "212-8501" based on the letter image shown in FIG. 6. In this time, the character recognition processing section 104 detects six character lines from the letter image, and performs character separation and character recognition for each character line. To ensure that the character-separation candidates include the correctly separated character image, it is preferable that not a single character-separation candidate but a plurality of character-separation candidates be generated by changing the separation algorithm or parameters. In this embodiment, it is assumed that three character-separation candidates as shown in FIG. 7 are generated for the destination postal code line "212-8501".

The character image selection processing section 105 searches the character-separation candidates for the one that matches the information input through the input device 13. Then, it stores the respective images of the characters in the matched character-separation candidate and the character types thereof (character codes or the like) in the character image storage section 106. Of the three candidates shown in FIG. 7, which were obtained as the result of character separation and character recognition of the destination postal code line, only the uppermost candidate has the recognition result that matches with the input information "212-8501". Therefore, the character images and the character recognition result of this candidate are stored in the character image storage section 106.

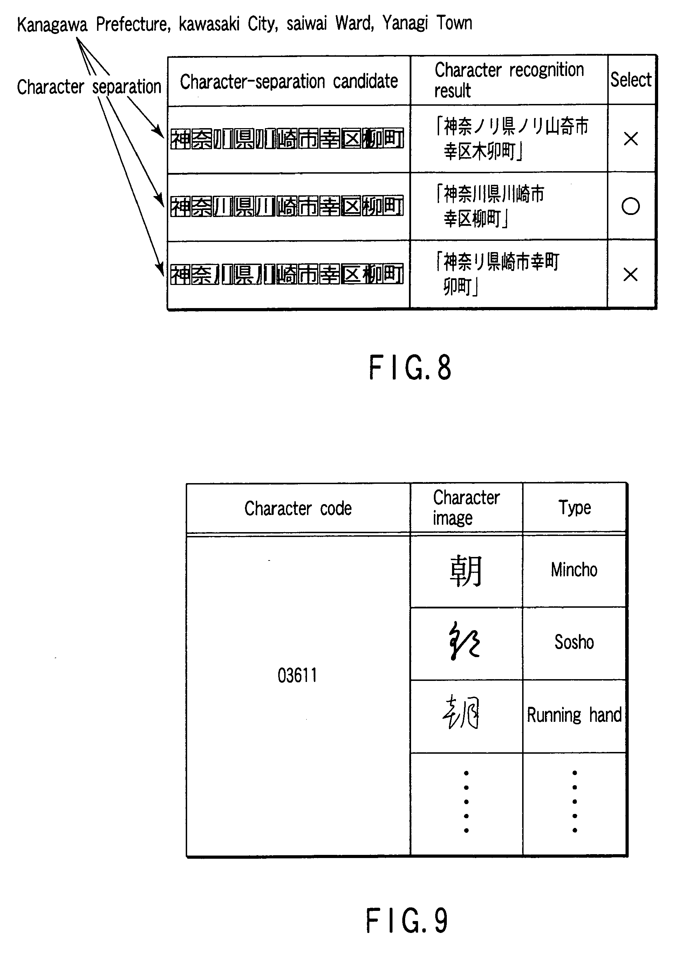

If "212-8501" is written as the postal code of the destination address, the destination address information written in an area adjacent to the destination postal code must match with the address information obtained by searching the address database 101. Therefore, the result of character separation and character recognition of the area adjacent to the destination postal code line is collated with "Kanagawa Prefecture, Kawasaki City, Saiwai Ward, Yanagi Town" or "Kawasaki City, Saiwai Ward, Yanagi Town". FIG. 8 shows an example of character-separation candidates and results of character recognition, which are obtained when the character recognition processing section 104 processes the destination address line. In the example shown in FIG. 8, the character recognition result of the second character-separation candidate matches with the result of search "Kanagawa Prefecture, Kawasaki City, Saiwai Ward, Yanagi Town" obtained from the database 101 as the address information corresponding to the postal code "212-8501". Therefore, these character images and the character recognition result are stored in the character image storage section 106.

As described above, the character images constituting the destination postal code line and the destination address line and the information on the character types are obtained only by the process carried out by the operator, i.e., watching the letter image of one letter and inputting the destination postal code written thereon. This process is repeated for letter images of a plurality of pieces, so that the character images constituting the destination postal code line and the destination address line and the information on the character types on the respective letters are stored in the character image storage section 106.

The character image information thus accumulated in the character image storage section 106 are processed by the character dictionary learning processing section 107 in a time period in which the operator does not carry out the teaching operation. In the character dictionary learning processing section 107, the character images are classified by character type and used in a learning process for the character dictionary in the character dictionary storage section 103. After the learning process, the former character dictionary is replaced with the renewed character dictionary.

The postal matter in Japan may bear printed characters of various typefaces, such as the Mincho typeface, or handwritten characters, for example, written in a cursive style. Therefore, the character image storage section 106 may store various categories of characters, which represent the same character, for example, the Chinese character meaning "morning". If the character image storage section 106 stores a character image corresponding to a type of character, which has not been recorded in the character dictionary, the character image is additionally stored in the character dictionary in association with the corresponding character. For example, referring to FIG. 9, in the case where the character image in the Mincho style has been registered in association with the character code 03611, if a character image of a category different from the Mincho style, such as a cursive style, is stored in the character image storage section 106, the character image of the different category is additionally registered in association with the character code 03611 representing the Chinese character meaning "morning".

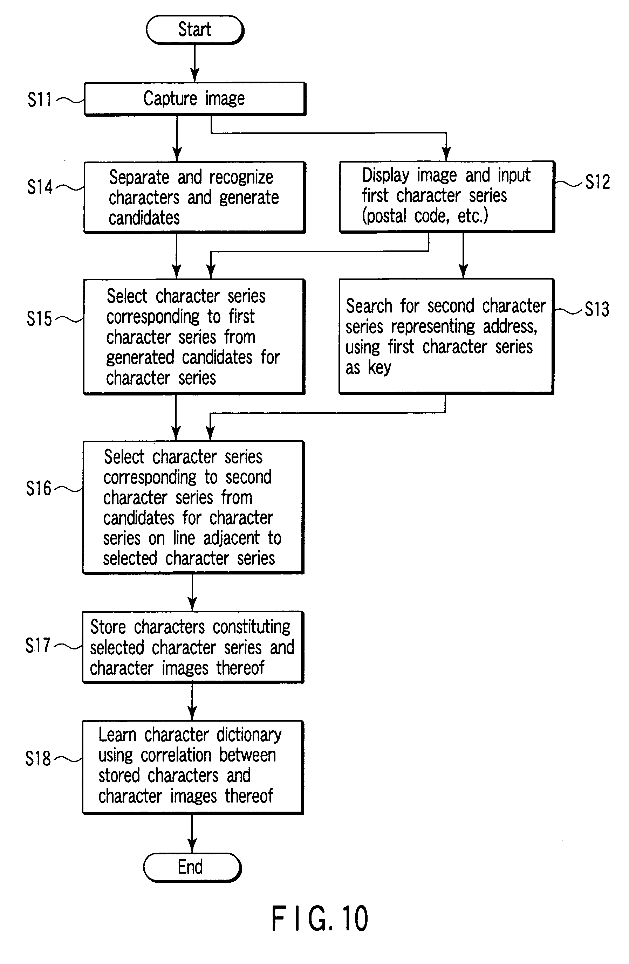

An operation of the system according to this embodiment will be described below with reference to the flowchart shown in FIG. 10.

When the letter image is captured through the scanner section 3, the image is subjected to necessary processing and displayed on the screen of the display 12 (step S11) .

When the operator who watched the letter image displayed on the display inputs the first character series (postal code or the like), the database search processing section 102 acquires the character series (step S12).

The database search processing section 102 searches the address database 101 for the second character series indicative of the address, using the first character series as a search key (step S13).

The character recognition processing section 104 separates characters from the image, recognizes the characters with reference to the character dictionary, and generates candidates for the character series (step S14).

The character image selection processing section 105 selects a character series corresponding to the first character series from the candidates generated by the character recognition processing section 104 (step S15), and then selects a character series corresponding to the second character series, obtained by the database search processing section 102, from the candidates for a line adjacent to the line of the character series previously selected (step S16).

The character image storage section 106 stores character images in association with the respective characters constituting a character series selected by the character image selection processing section 105 (step S17).

The character dictionary learning processing section 107 performs learning for the character dictionary based on the correlation between the characters stored in the character image storage section 106 and the associated character images (step S18).

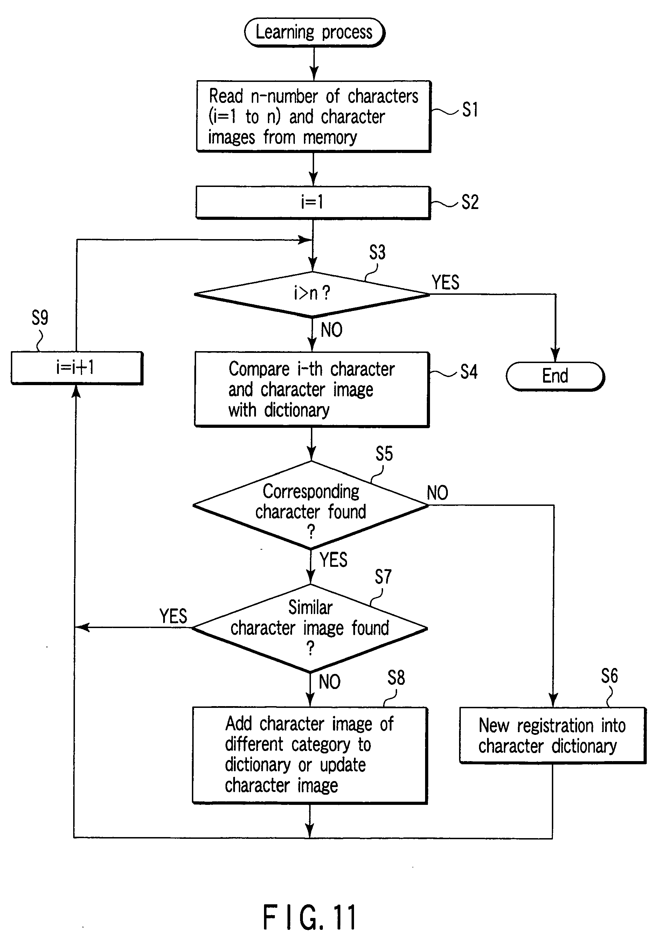

A detailed process in step S18 (character learning process) in FIG. 10 will be described with reference to the flowchart of FIG. 11.

An n-number of characters (i = 1 to n) and character images thereof are sequentially read from the character image storage section 106 (step S1), and the following process is performed on a character-by-character basis.

A variable i representing the number of a character to be recognized is set to 1, using a predetermined memory area (step S2).

It is determined whether the variable i exceeds n, that is, whether or not all characters have been studied (step S3). If not (No in step S3), the i-th character to be studied and a character image thereof are compared with reference to the character dictionary (step S4). Then, it is determined whether or not the character dictionary contains the corresponding character (step S5). If not (No in step S5), the combination of the i-th character to be studied and the character image thereof is recognized as new and registered in the character dictionary (step S6). Then, 1 is added to the variable i in the predetermined memory area, and the process from the steps S3 is repeated.

If the corresponding character is found in step S5 (Yes in step S5), it is determined whether or not a character image similar to the character is also present in the character dictionary (step S7). If a similar character image is present, registration is not newly performed, since the character image has already been registered. Then, 1 is added to the variable i in the predetermined memory area, and the process from the steps S3 is repeated.

If the corresponding character is found in step S5 (Yes in step S5) and a character image similar to the character is not found in step S7 (No in step S7), it is determined that the character image is different in category from the registered character images and the combination of the i-th character to be studied and the character image thereof is additionally registered (step S8). If the previously-registered character image corresponding to the character is unnecessary, an update process to overwrite the new character image on the registered character image may be performed. FIG. 11 shows that registration is not newly performed if it is determined in step S7 that a similar character image similar is present; however, such registration may be performed such that a plurality of character images can be registered for the same category. In this case, thereafter, one character image involving average feature of the plurality of character images may be newly produced and the produced image may be mainly used as the character dictionary for the corresponding category. After these steps, 1 is added to the variable i in the predetermined memory area, and the process from the steps S3 is repeated.

The process described with reference to FIG. 11 is also applicable to the other embodiments, which will be described later.

As described above, according to the first embodiment, the address database is searched using the character series input by the operator as a keyword, the address information corresponding to the keyword is retrieved, the character recognition result that matches with the address information is selected, the character pattern is separated from each of character candidates for the character line located at that position, and the recognition result is used in learning for the character dictionary. The learning for the character dictionary is also performed with respect to a character which is not input by the operator, and the character separation position is specified on the basis of the information input by the operator. Therefore, the character separation and the learning for the character dictionary can be carried out automatically. As a result, a highly-advanced character dictionary can be produced easily.

### <Second Embodiment>

The second embodiment of the present invention will now be described.

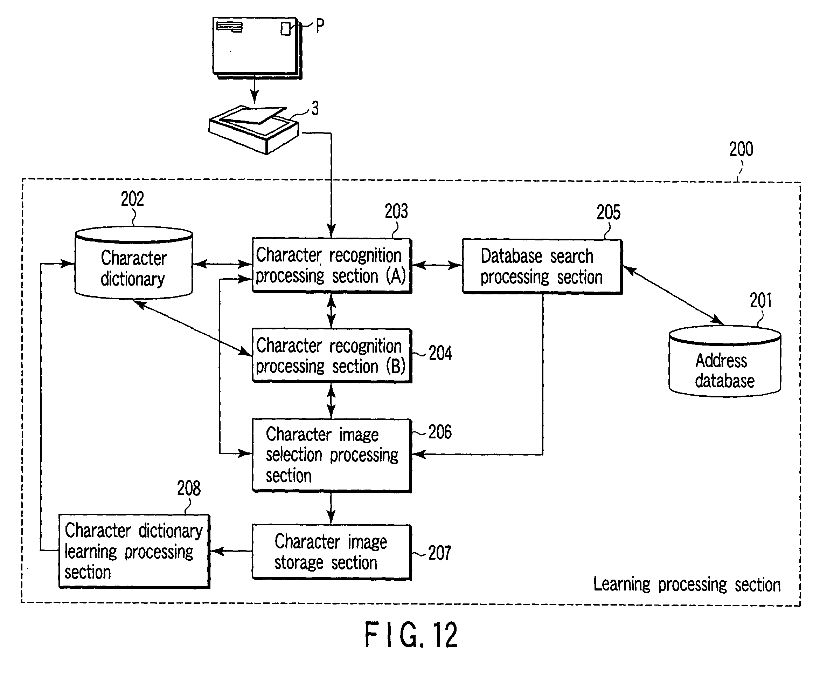

FIG. 12 is a block diagram showing the configuration of a system according to the second embodiment of the present invention, which performs automatic learning for a character dictionary to recognize destination information written on postal matter without any teaching by the operator.

This system includes the scanner section 3 to capture a letter image of postal matter P and a learning processing section 200. As well as the first embodiment, the second embodiment will be described on the assumption that the letter image shown in FIG. 6 is input.

The learning processing section 200 embodies the information processing apparatus 10 described above. It includes an address database 201, a character dictionary storage section 202, a character recognition processing section (A) 203, a character recognition processing section (B) 204, a database search processing section 205, a character image selection processing section 206, a character image storage section 207, and a character dictionary learning processing section 208.

The address database 201 stores information on addresses for use in description on the postal matter P.

The character dictionary storage section 202 stores a character dictionary indicative of the correlation between each of the characters for use in description on the postal matter P and a character image corresponding to the character. In the character dictionary, a plurality of different kinds of character images can be registered in association with one character.

The character recognition processing section (A) 203 uses the character dictionary stored in the character dictionary storage section 202 to perform character recognition of a specified area in an image, and generates candidates for a first character series (the name or designation, the phone number, the postal code, etc.).

The character recognition processing section (B) 204 generates candidates for a second character series corresponding to the address from a line adjacent to the line of the first character series on the image.

The database search processing section 205 uses the first character series (e.g., the name or designation, phone number, postal code or the like) generated by the character recognition processing section (A) 203 as a search key, and searches the information stored in the address database 201 for the second character series corresponding to the address.

The character image selection processing section 206 selects a character series corresponding to the second character series searched by the database search processing section 205 from the candidates generated by the character recognition processing section (B) 204.

The character image storage section 207 stores character images in association with the respective characters constituting a character series selected by the character image selection processing section 206.

The character dictionary learning processing section 208 performs learning for the character dictionary stored in the character dictionary storage section 202 based on the correlation between the characters stored in the character image storage section 207 and the associated character images.

A detailed process in the system having the above functions will now be described.

The character recognition processing section (A) 203 separates the letter image captured by the scanner section 3 into character lines and character candidates, and recognizes the respective character candidates with reference to the character dictionary stored beforehand in the character dictionary storage section 202. Then, it detects a character series having a specific characteristic. For example, a postal code may be used as the character series having a specific characteristic. If the postal code is used as the character series, a character line consisting of seven numerals is detected from the image. In the case of the letter image shown in FIG. 6, "001-0000" and "212-8501" are detected.

The character series detected by the character recognition processing section (A) 203 is sent to the database search processing section 205. The database search processing section 205 searches the address database 201 using the information sent from the character recognition processing section (A) 203 as a search key. Assuming that the information registered in the address database 201 is as shown in FIG. 4, the result of the search for "212-8501" is "Kanagawa Prefecture, Kawasaki City, Saiwai Ward, Yanagi Town" and the result of the search for "001-0000" is "Hokkaido, Sapporo City, Kita Ward".

If there is a line that cannot be recognized as a postal code, or that can be recognized as a postal code but is not registered in the address database 201, the line is not recognized as a postal code line.

If a postal code line is detected, a line adjacent to the postal code line is processed by the character recognition processing section (B) 204. The character recognition processing section (B) 204 separates character candidates, and recognizes them with reference to the character dictionary stored beforehand in the character dictionary storage section 202.

The character image selection processing section 206 checks whether any of the character separation candidates detected by the character recognition processing section (B) 204 matches with the address information obtained by searching the address database 201. For example, if the character recognition processing section (A) 203 detects "212-8501" as a postal code, the address information "Kanagawa Prefecture, Kawasaki City, Saiwai Ward, Yanagi Town" is acquired from the database shown in FIG. 4. Then, the character image selection processing section 206 checks whether the acquired address information matches with any of the character separation candidates or the character recognition results obtained by the character recognition processing section (B) 204. If the result of the processing by the character recognition processing section (B) 204 is as shown in FIG. 8, the character recognition result of the second character-separation candidate and the corresponding character recognition result are selected as a result of the check. Then, the character image and the character recognition result are stored in the character image storage section 207.

As described above, the character images constituting the destination postal code line and the destination address line and the information on the character types are obtained only by a process of detecting information that is necessarily written on the letter image of one piece, for example, a postal code. This process is repeated for letter images of a plurality of pieces, so that the character images constituting the destination postal code line and the destination address line and the information on the character types on the respective pieces are stored in the character image storage section 207.

The character image information thus accumulated in the character image storage section 207 are processed by the character dictionary learning processing section 208 in a time period in which the letter image recognition process is not carried out. In the character dictionary learning processing section 208, the character images are classified by character type and used in a learning process for the character dictionary in the character dictionary storage section 202. After the learning process, the former character dictionary is replaced with the renewed character dictionary.

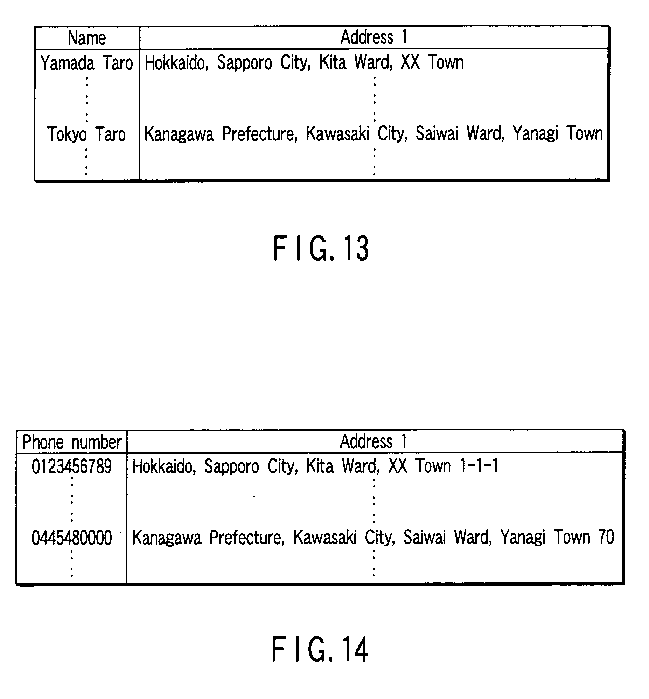

In the above description, the address database storing information, which enables an address search by using a postal code as a search key, is exemplified. However, it is possible to use an address database storing information as shown in FIG. 13, which enables an address search by using a name as a search key. Alternatively, it is possible to use an address database storing information as shown in FIG. 14, which enables an address search by using a phone number as a search key.

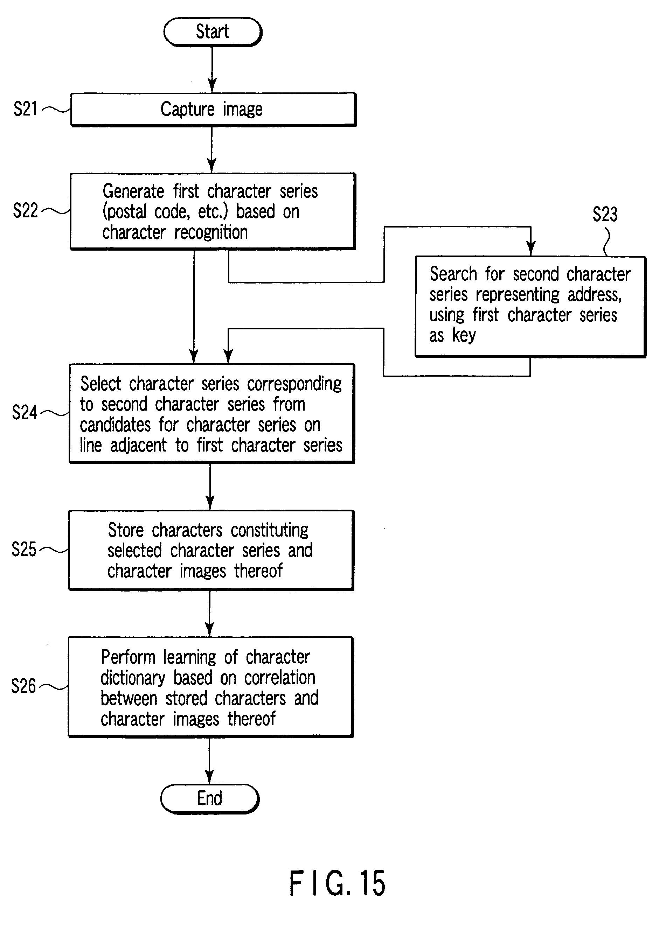

An operation of the system according to this embodiment will be described below with reference to the flowchart shown in FIG. 15.

When the letter image is captured through the scanner section 3 (step S21), the character recognition processing section (A) 203 separates characters from the image, recognizes the characters with reference to the character dictionary, and generates candidates for the character series, especially candidates for the first character series (postal code, etc.) (step S22).

The database search processing section 205 searches the address database for the second character series indicative of the address, using the first character series generated by the character recognition processing section (A) as a search key (step S23).

The character recognition processing section (B) 204 recognizes a character series on a line adjacent to the line in the image of the first character series generated by the character recognition processing section (A) 203, and generates candidates for the character series. Then, it selects a character series corresponding to the second character series, obtained by the database search processing section 205, from the generated candidates (step S24).

The character image storage section 207 stores character images in association with the respective characters constituting a character series selected by the character image selection processing section 206 (step S25).

The character dictionary learning processing section 208 performs learning for the character dictionary based on the correlation between the characters stored in the character image storage section 207 and the associated character images (step S26).

According to the second embodiment described above, the learning for the character dictionary can be performed automatically based on the description on the postal matter or the like, even if the operator does not input postal code information or the like through the input device. Therefore, a highly-advanced character dictionary can be produced easily without imposing a workload on the operator.

The configuration and operation of learning for the character dictionary according to the first and second embodiments described above are also applicable to third and fourth embodiments, which will be described below.

### <Third Embodiment>

The third embodiment of the present invention will now be described.

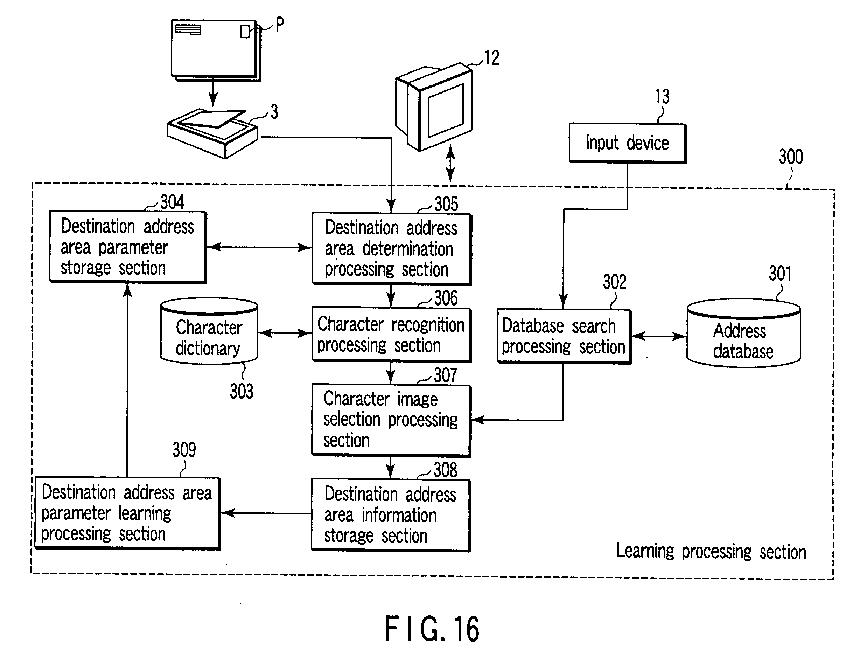

FIG. 16 is a block diagram showing the configuration of a system according to the third embodiment of the present invention, which performs automatic learning for a standard position of a destination information description area on postal matter based on character series input by the operator.

This system includes the scanner section 3 to capture a letter image of postal matter P, the display 12 to display the captured image, the input device 13 through which the operator inputs data and a learning processing section 300.

The learning processing section 300 embodies the information processing apparatus 10 described above. It includes an address database 301, a database search processing section 302, a character dictionary storage section 303, a destination address area parameter storage section 304, a destination address area determination processing section 305, a character recognition processing section 306, a character image selection processing section 307, a destination address area information storage section 308, and a destination address area parameter learning processing section 309.

The address database 301 stores information on addresses for use in description on the postal matter P.

The database search processing section 302 uses a first character series (e.g., a name or designation, phone number, postal code or the like) input through the input device 13 as a search key, and searches the information stored in the address database 301 for a second character series corresponding to an address.

The character dictionary storage section 303 stores a character dictionary indicative of the correlation between each of the characters for use in description on the postal matter P and a character image corresponding to the character. In the character dictionary, a plurality of different kinds of character images can be registered in association with one character.

The destination address area parameter storage section 304 stores destination address area information (parameter) representing a destination address area in the image.

The destination address area determination processing section 305 determines the area, for which the character recognition processing section 306 should perform character recognition, based on the destination address area information (parameter) stored in the destination address area parameter storage section 304.

The character recognition processing section 306 uses the character dictionary stored in the character dictionary storage section 303 to perform character recognition of the area determined by the destination address area determination processing section 305, and generates candidates for character series respectively corresponding to the name or designation, the phone number, the postal code, the address, etc.

The character image selection processing section 307 selects a character series corresponding to the second character series searched by the database search processing section 302 from the candidates generated by the character recognition processing section 306. More specifically, the character image selection processing section 307 first selects a character series corresponding to the first character series input through the input device 13 from the candidates generated by the character recognition processing section 306, and then selects a character series corresponding to the second character series from the candidates for a line adjacent to the line of the selected character series in the image.

The destination address area information storage section 308 stores information (parameter) representing the respective areas of the first character series and the second character series selected by the character image selection processing section 307.

The destination address area parameter learning processing section 309 performs learning for the destination address area information (parameter) stored in the destination address area parameter storage section 304 based on the information (parameter) representing the respective areas stored in the destination address area information storage section 308.

A detailed process in the system having the above functions will now be described.

The letter image captured by the scanner section 3 is subjected to necessary data processing, and then displayed on the screen of the display 12.

The operator inputs a part of the destination information on the letter image, for example, postal code information, through the input device 13. The input information is sent to the database search processing section 302 in the learning processing section 300. The database search processing section 302 searches the address database 301 using the input information as a search key.

FIGS. 4 and 5 show examples of information registered in the address database. In the example shown in FIG. 4, address information corresponding to the respective postal codes is registered. The address information corresponding to a postal code, from the prefecture name to the town name, is handled as a group of data. There may be a case where the destination address includes the prefecture name and a case where the destination address does not include the prefecture name and begins with the city, town or village name. To deal with both cases, the prefecture name information and the city, town or village name information may be handled as distinct data, as shown in FIG. 5. In this case, if "2128501" is input as postal code information, the database search processing section 302 obtains two pieces of data "Kanagawa Prefecture, Kawasaki City, Saiwai Ward, Yanagi Town" and "Kawasaki City, Saiwai Ward, Yanagi Town" as the database search result.

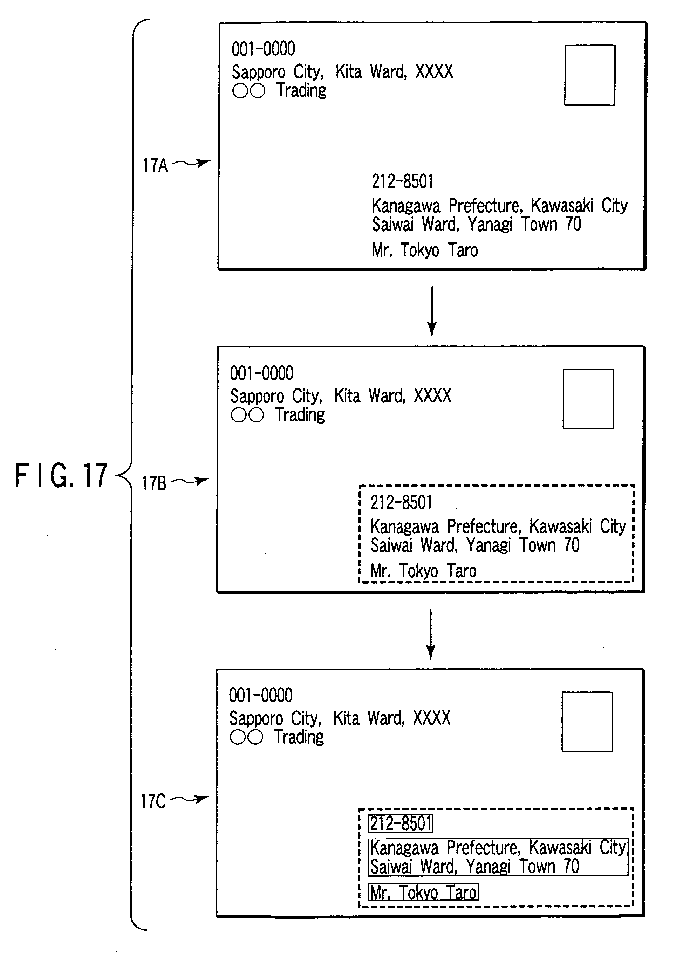

The destination address area determination processing section 305 estimates a destination description range on the letter image based on various parameters relating to the destination address area stored in the destination address area parameter storage section 304. FIG. 17 shows an example of a process of estimating a destination description range. In FIG. 17, a reference numeral 17A denotes a letter image. The area enclosed by the broken line on a letter image 17B is an address description area estimated on the basis of the parameter information stored in the destination address area parameter storage section 304.

The character recognition processing section 306 separates the range estimated as the address description area of the letter image 17B in FIG. 17 into character lines and character candidates, and recognizes the respective character candidates with reference to the character dictionary stored beforehand in the character dictionary storage section 303. A letter image 17C in FIG. 17 shows a state in which the lines are separated from the address description range. The character recognition processing section 306 detects a character series that matches with the character series input by the operator through the input device 13, for example, the postal code of the destination address. In the case of the letter image 17C in FIG. 17, the line "212-8501" is detected.

If "212-8501" is detected as the postal code of the destination address, the destination address information written in an area adjacent to the destination postal code must match with the address information obtained by searching the address database 301. Therefore, the character image selection processing section 307 collates the result of character separation and character recognition of the area adjacent to the destination postal code line with "Kanagawa Prefecture, Kawasaki City, Saiwai Ward, Yanagi Town" or "Kawasaki City, Saiwai Ward, Yanagi Town". FIG. 8 shows an example of character-separation candidates and results of character recognition, which are obtained when the character recognition processing section 306 processes the destination address line. In the example shown in FIG. 8, the character recognition result of the second character-separation candidate matches with the result of search "Kanagawa Prefecture, Kawasaki City, Saiwai Ward, Yanagi Town" obtained from the database 301 as the address information corresponding to the postal code "212-8501". Therefore, it is determined that this line is the destination address line.

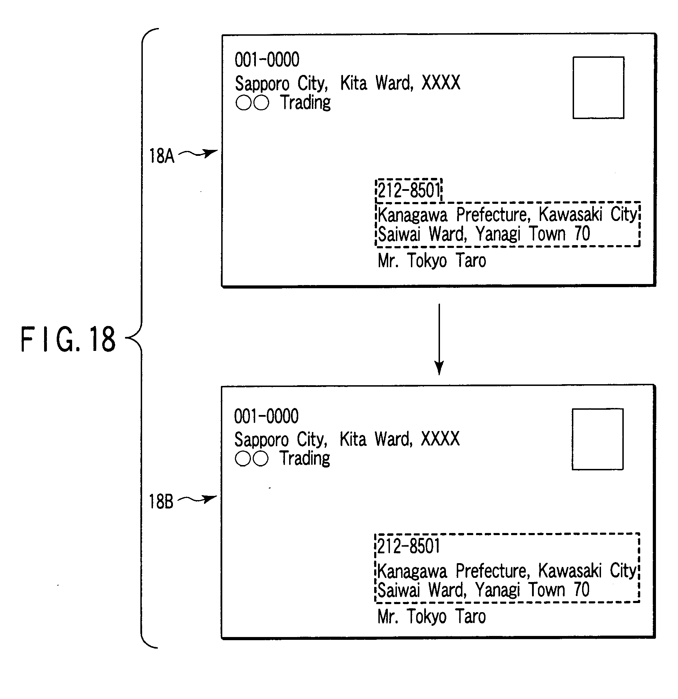

When the positions of the destination postal code line and the destination address line are detected, the destination address area information storage section 308 stores information on the destination information description area on the letter. The destination information description area is detected by, for example, a method as shown in FIG. 18. In this method, the areas of the detected destination postal code line and destination address line in a letter image 18A in FIG. 18 are combined as shown in a letter image 18B in FIG. 18, so that the destination information description area is detected.

As described above, the information on the area where the destination address information is described is obtained only by the process carried out by the operator, i.e., watching the letter image of one letter and inputting the destination postal code written thereon. This process is repeated for letter images of a plurality of letters, so that the information on the destination information description area on the respective letters is stored in the character image storage section 308.

The various information on the destination information description area thus accumulated in the character image storage section 308 is processed by the destination address area parameter learning processing section 309 in a time period in which the operator does not carry out the teaching operation. In the destination address area parameter learning processing section 309, learning for the information on the standard description position or size of the destination information is carried out based on the information stored in the destination address area information storage section 308. After the learning process, the former parameter stored in the destination address area parameter storage section 304 is replaced with the renewed parameter.

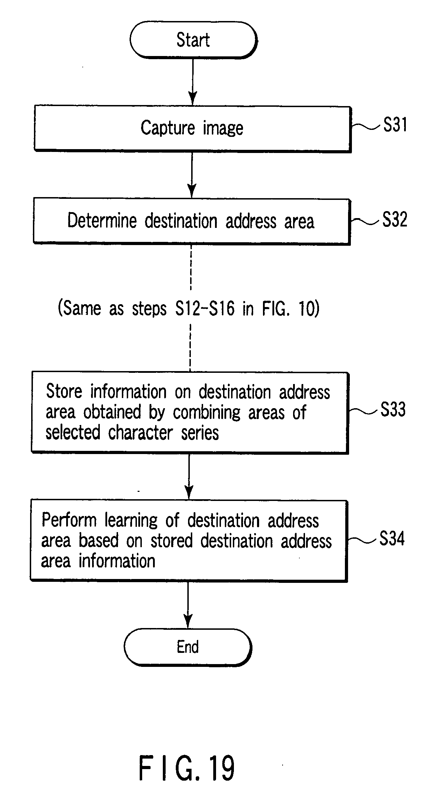

An operation of the system according to this embodiment will be described below with reference to the flowchart shown in FIG. 19.

When the letter image is captured through the scanner section 3 (step S31), the destination address area determination processing section 305 determines the destination address area based on the destination address area information (parameter) (step S32).

Then, the character recognition processing section 306 and the character image selection processing section 307, etc. carry out the process of the steps S12 to S16 described above with reference to FIG. 10 with respect to the destination address area determined by the destination address area determination processing section 305.

In the destination address area information storage section 308, the information (parameter) on the destination address area, formed by combining the areas of the character series selected by the character image selection processing section 307, is stored (step S33).

The destination address area parameter learning processing section 309 carries out learning for the standard position of the destination address area, based on the information (parameter) of the destination address area stored in the destination address area information storage section 308 (step S34).

As described above, according to the third embodiment, the learning for not only the character dictionary but also the standard position of the destination address area can be carried out automatically. As a result, a highly-advanced character dictionary can be produced easily.

### <Fourth Embodiment>

The fourth embodiment of the present invention will now be described.

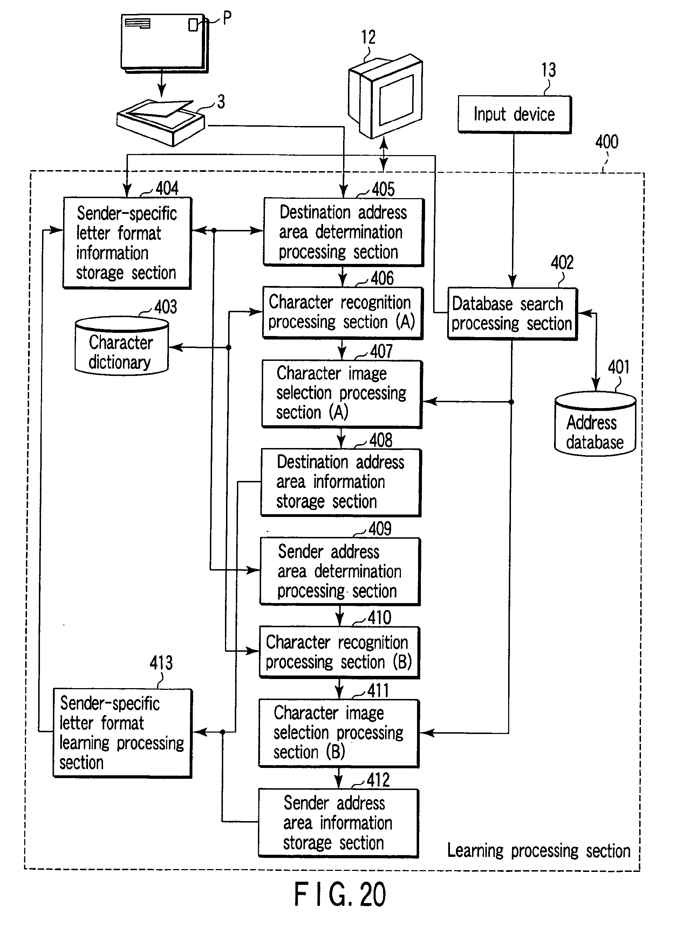

FIG. 20 is a block diagram showing the configuration of a system according to a fourth embodiment of the present invention, which performs automatic learning for a standard position of a sender address information description area and a destination information description area on postal matter, with respect to each sender, based on character series input by the operator.

This system includes the scanner section 3 to capture a letter image of postal matter P, a display 12 to display the captured image, an input device 13 through which the operator inputs data and a learning processing section 400.

The learning processing section 400 embodies the information processing apparatus 10 described above. It includes an address database 401, a database search processing section 402, a character dictionary storage section 403, a sender-specific letter format information storage section 404, a destination address area determination processing section 405, a character recognition processing section (A) 406, a character image selection processing section (A) 407, a destination address area information storage section 408, a sender address area determination processing section 409, a character recognition processing section (B) 410, a character image selection processing section (B) 411, a sender address area information storage section 412, and a sender-specific letter format learning processing section 413.

The address database 401 stores information on addresses for use in description on the postal matter P.

The database search processing section 402 uses a first character series (e.g., a name or designation, phone number, postal code or the like) input through the input device 13 as a search key, and searches the information stored in the address database 401 for a second character series corresponding to an address.

The character dictionary storage section 403 stores a character dictionary indicative of the correlation between each of the characters for use in description on the postal matter P and a character image corresponding to the character. In the character dictionary, a plurality of different kinds of character images can be registered in association with one character.

The sender-specific letter format information storage section 404 stores sender-specific letter format information, which defines letter formats specific to the respective senders.

The destination address area determination processing section 405 determines the area (destination address area), for which the character recognition processing section (A) 406 should perform character recognition, based on the sender-specific letter format information stored in the sender-specific letter format information storage section 404.

The character recognition processing section (A) 406 uses the character dictionary stored in the character dictionary storage section 403 to perform character recognition for the area determined by the destination address area determination processing section 405, and generates candidates for character series respectively corresponding to the name or designation, the phone number, the postal code, the address, etc.

The character image selection processing section (A) 407 selects a character series corresponding to the second character series searched by the database search processing section 402 from the candidates generated by the character recognition processing section (A) 406. More specifically, the character image selection processing section (A) 407 first selects a character series corresponding to the first character series input through the input device 13 from the candidates generated by the character recognition processing section (A) 406, and then selects a character series corresponding to the second character series from the candidates for a line adjacent to the line of the selected character series in the image.

The destination address area information storage section 408 stores information indicative of the respective areas of the first character series and the second character series selected by the character image selection processing section (A) 407.

The sender address area determination processing section 409 determines the area (sender address area), for which the character recognition processing section (B) 410 should perform character recognition, based on the sender-specific letter format information stored in the sender-specific letter format information storage section 404.

The character recognition processing section (B) 410 uses the character dictionary stored in the character dictionary storage section 403 to perform character recognition for the area (sender address area) determined by the sender address area determination processing section 409, and generates candidates for character series respectively corresponding to the name or designation, the phone number, the postal code, the address, etc.

The character image selection processing section (B) 411 selects a character series corresponding to the second character series searched by the database search processing section 402 from the candidates generated by the character recognition processing section (B) 410. More specifically, the character image selection processing section (B) 411 first selects a character series corresponding to the first character series input through the input device 13 from the candidates generated by the character recognition processing section (B) 410, and then selects a character series corresponding to the second character series from the candidates for a line adjacent to the line of the selected character series in the image.

The sender address area information storage section 412 stores information indicative of the respective areas of the first character series and the second character series selected by the character image selection processing section (B) 411.

The sender-specific letter format learning processing section 413 performs learning for the sender-specific letter format information stored in the sender-specific letter format information storage section 404 based on the information indicative of the respective areas of the first character series and the second character series stored in the destination address area information storage section 408, and the information indicative of the respective areas of the first character series and the second character series stored in the sender address area information storage section 412.

A detailed process in the system having the above functions will now be described.

The letter image captured by the scanner section 3 is subjected to necessary data processing, and then displayed on the screen of the display 12.

The operator inputs parts of the sender information and the destination information on the letter image, for example, postal code information, through the input device 13. The input information is sent to the database search processing section 402 in the learning processing section 400. The database search processing section 402 searches the address database 401 using the input information relating to the sender as a search key, and obtains address information on the sender. Likewise, the database search processing section 402 searches the address database 401 using the input information relating to the destination (recipient) as a search key, and obtains address information on the recipient.

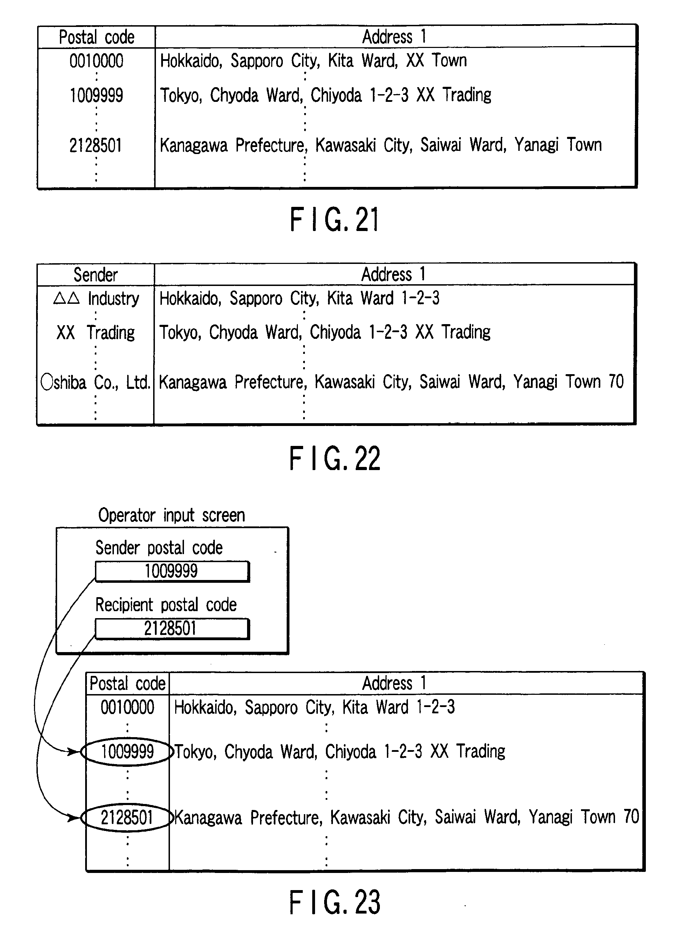

A postal code may be exclusively assigned to a company or person, which forwards or receives a great number of pieces of mail. FIG. 21 is a diagram showing that specified companies are respectively assigned exclusive postal codes. In the example shown in FIG. 21, the postal code "1009999" is assigned to "XX Trading".

In the system shown in FIG. 20, the one address database is used to search for address information of both the sender and the recipient. However, separate databases may be used for this purpose. For example, address information of the recipient may be searched, using a postal code as a search key, while address information of the sender may be searched, using a sender name as a search key, through the database as shown in FIG. 22.

In the following description, it is assumed that address information of both the sender and the recipient is searched using postal codes.

FIG. 23 shows a flow of searching the address database 401 for the address information based on the postal code information of the sender and the recipient input by the operator. The operator inputs the postal codes of the sender and recipient through the input device 13. However, if a great number of pieces of mail from the same sender are to be processed, it is unnecessary to input the sender postal code information each time. In this case, after the process for one letter image is completed and before the next letter image is processed, the information of the previously input sender postal code may not be cleared. If the information of the sender postal code remains, it is necessary for the operator to input only the postal code of a recipient in order to start the recognition process. Therefore, the processing efficiency is improved.

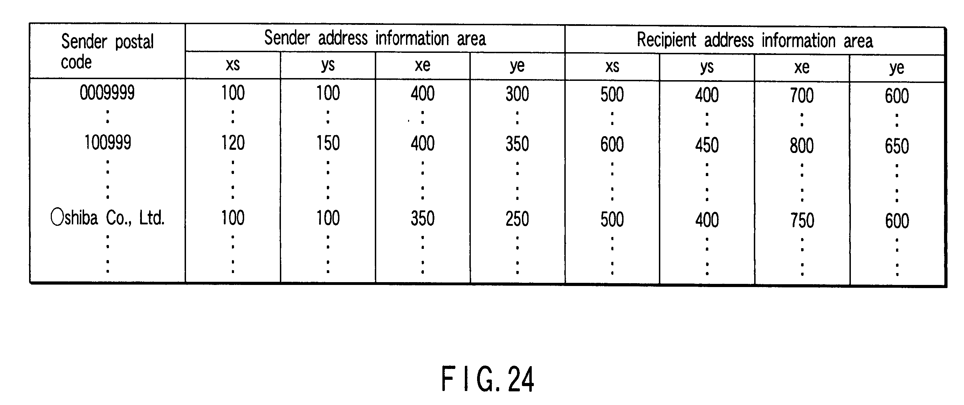

The input information on the sender is sent to the sender-specific letter format information storage section 404. As shown in FIG. 24, the sender-specific letter format information storage section 404 stores information on each sender input by the operator and standard positions on a letter image of the sender and recipient address description areas obtained by using a postal code as a search key. The letter image captured by the scanner section 3 is sent to the destination address area determination processing section 405. The destination address area determination processing section 405 estimates a destination description range on the letter image based on various parameters prepared for the postal code of the sender, input by the operator, of the destination area information stored in the sender-specific letter format information storage section 404.

The character recognition processing section (A) 406 separates the range estimated as the address description area of the letter image into character lines and character candidates, and recognizes the respective character candidates with reference to the character dictionary stored beforehand in the character dictionary storage section 403. A letter image 17C in FIG. 17 shows a state in which the lines are separated from the address description range. The character recognition processing section (A) 406 detects a character series that matches with the character series input by the operator through the input device 13, for example, the postal code of the destination address. In the case of the letter image 17C in FIG. 17, the line "212-8501" is detected.

If "212-8501" is detected as the postal code of the destination address, the destination address information written in an area adjacent to the destination postal code must match with the address information obtained by searching the address database 401. Therefore, the character image selection processing section (A) 407 collates the result of character separation and character recognition of the area adjacent to the destination postal code line with "Kanagawa Prefecture, Kawasaki City, Saiwai Ward, Yanagi Town" or "Kawasaki City, Saiwai Ward, Yanagi Town". If the character recognition result matches with the result of search obtained as the address information, it is determined that this line is the destination address line.

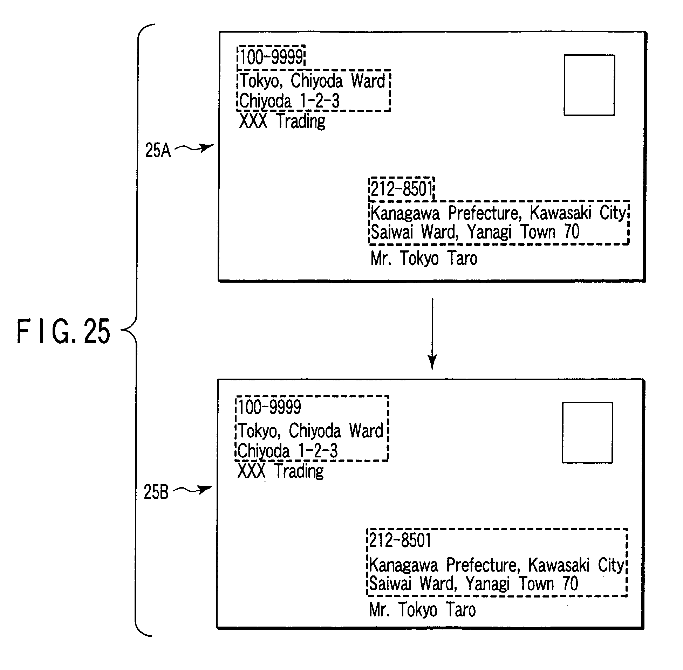

When the positions of the destination postal code line and the destination address line are detected, the destination address area information storage section 408 stores information on the destination information description area on the letter. The destination information description area is detected by, for example, a method as shown in FIG. 25. In this method, the areas of the detected destination postal code line and destination address line in a letter image 25A in FIG. 25 are combined as shown in a letter image 25B in FIG. 25, so that the destination information description area is detected.

In similar procedures, the sender address area determination processing section 409 estimates a sender address information description range, the character recognition processing section (B) 410 separates the range into character candidates to recognize the respective character candidates, and the character image selection processing section (B) 411 detects a sender address line. In the sender address area information storage section 412, the areas of the detected destination postal code line and sender address line in the letter image 25A in FIG. 25 are combined as shown in the letter image 25B in FIG. 25, so that the sender information description area is detected.

As described above, the information on the area where the sender and recipient address information is described is obtained only by the process carried out by the operator, i.e., watching the letter image of one letter and inputting the postal codes of the sender and recipient written on the letter. This process is repeated for letter images of a plurality of letters, so that the information on the sender and recipient information description areas on the respective letters, clarified by sender, is stored in the sender-specific letter format learning processing section 413.

The various information thus accumulated in the destination address area information storage section 408 and the sender address area information storage section 412 is processed by the sender-specific letter format learning processing section 413 in a time period in which the operator does not carry out the teaching operation. After the learning process, the former information stored in the sender-specific letter format information storage section 404 is replaced with the renewed parameter.

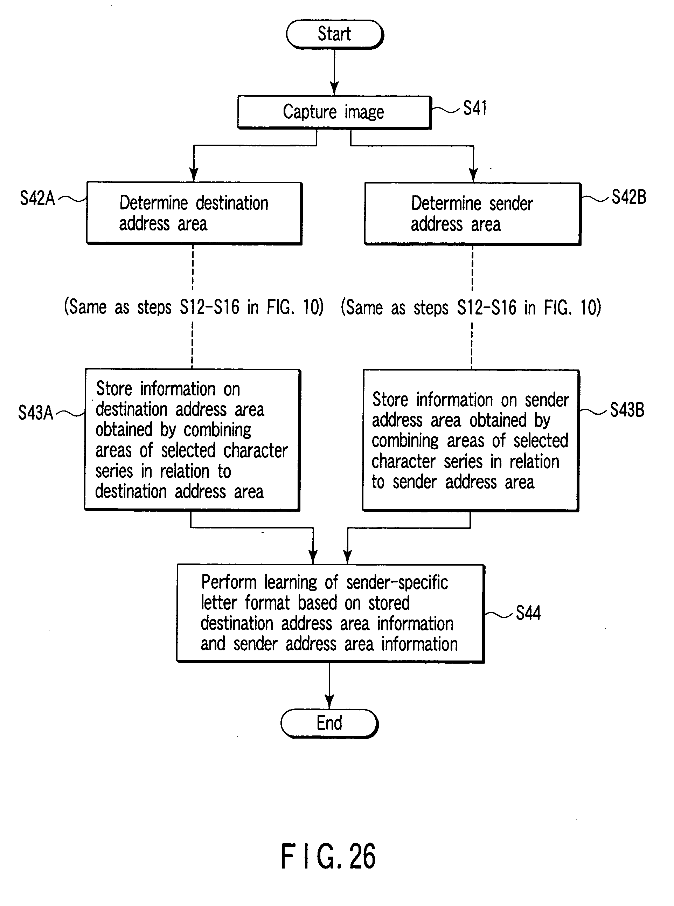

An operation of the system according to this embodiment will be described below with reference to the flowchart shown in FIG. 26.

When the letter image is captured through the scanner section 3 (step S41), the following process is performed.

The destination address area determination processing section 405 determines the destination address area based on the destination address area information (parameter) in the sender-specific letter format information (step S42A).

Then, the character recognition processing section (A) 406 and the character image selection processing section (A) 407, etc. carry out the process of the steps S12 to S16 described above with reference to FIG. 10 with respect to the destination address area determined by the destination address area determination processing section 405.

In the destination address area information storage section 408, the information (parameter) on the destination address area, formed by combining the areas of the character series selected by the character image selection processing section (A) 407, is stored (step S43A).

The sender address area determination processing section 409 determines the sender address area based on the sender address area information (parameter) in the sender-specific letter format information (step S42B).

Then, the character recognition processing section (B) 410 and the character image selection processing section (B) 411, etc. carry out the process of the steps S12 to S16 described above with reference to FIG. 10 with respect to the sender address area determined by the sender address area determination processing section 409.

In the sender address area information storage section 412, the information (parameter) on the sender address area, formed by combining the areas of the character series selected by the character image selection processing section (B) 411, is stored (step S43B).

The sender-specific letter format learning processing section 413 carries out learning for the standard positions of the destination address area and the sender address area in the sender-specific letter format, based on the information (parameter) of the destination address area stored in the destination address area information storage section 408 and the information (parameter) of the sender address area stored in the sender address area information storage section 412 (step S44).

As described above, according to the fourth embodiment, the learning for not only the character dictionary and the standard position of the destination address area but also the standard position of the sender address area can be carried out automatically. As a result, a highly-advanced character dictionary can be produced easily.

The procedures of each embodiment described above may be prestored as a computer program in a computer-readable storage medium (e.g., a magnetic disk, an optical disk, and a semiconductor memory), and read out and executed by a processor as needed. The computer program can be distributed from one computer to another computer through a communication medium.

Each of the above-described embodiments shows an example of an information processing apparatus which processes letters onto which destination and the like are written in conformity to the Japanese postal description format; however, the invention is of course applicable to the case where the information processing apparatus processes letters onto which destination and the like are written in conformity to a different postal description format used in, e.g., USA, Korea, Germany, France, or Italy.

As has been described above, according to the present invention, a high-performance recognition process can be realized, while the workload of the operator is reduced.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An information processing apparatus for capturing a letter image bearing address information and performs a character recognition process, the apparatus **characterized by** comprising:
address information storage means (101, 201, 301 or 401) for storing information relating to addresses for use in description of a letter;
search processing means (102, 205, 302 or 402) for searching the information stored in the address information storage means, using a first character series as a search key, for a second character series corresponding to an address;
character dictionary storage means (103, 202, 303 or 403) for storing a character dictionary indicative of correlation between each of characters used in the letter and a character image thereof;
character recognition processing means (104, 203, 204, 306, 406 or 410) for performing character recognition with respect to a predetermined area in the image, using the character dictionary stored in the character dictionary storage means, and generating candidates for a character series including at least an address;
character image selection processing means (105, 206, 307, 407 or 411) for selecting a character series corresponding to the second character series searched by the search processing means from the candidates generated by the character recognition processing means; and
character dictionary learning processing means (107 or 208) for performing a learning process with respect to the character dictionary stored in the character dictionary storage means, based on correlation between each of characters constituting the character series selected by the character image selection processing means and a character image thereof.

2. The information processing apparatus according to claim 1, **characterized in that** the character dictionary stored in the character dictionary storage means (103, 202, 303 or 403) is configured to register a plurality of different kinds of character images in association with one character.

3. The information processing apparatus according to claim 1, **characterized in that** the first character series corresponds to a postal code.

4. The information processing apparatus according to claim 1, **characterized in that** the first character series corresponds to a name or designation.

5. The information processing apparatus according to claim 1, **characterized in that** the first character series corresponds to a phone number.

6. The information processing apparatus according to claim 1, **characterized in that** the first character series is input through an input device (13).

7. The information processing apparatus according to claim 6, **characterized in that** the character image selection processing means (105, 206, 307, 407 or 411) selects a character series corresponding to the first character series input through the input device from the candidates generated by the character recognition processing means, and selects a character series corresponding to the second character series from candidates of a character series of a line adjacent to a line of the selected character series in the image.

8. The information processing apparatus according to claim 1, **characterized in that** the character recognition processing means (104, 203, 204, 306, 406 or 410) includes first recognition processing means (203) for performing character recognition with respect to a predetermined area in the image and generating candidates for the first character series used as the search key, and second recognition processing means (204) for generating candidates for the second character series from a line adjacent to a line of the first character series in the image.

9. The information processing apparatus according to claim 7, **characterized by** further comprising:
destination address area information storage means (304) for storing destination address area information indicative of an area of a destination address in the image;
destination address area determination means (305) for determining an area, which is to be processed by the character recognition processing means, based on the destination address area information stored in the destination address area information storage means; and
destination address area information learning processing means (309) for performing a learning process with respect to the destination address area information stored in the destination address area information storage means, based on areas on the image of the first character series and the second character series selected by the character image selection processing means.

10. The information processing apparatus according to claim 7, **characterized by** further comprising:
sender-specific letter format information storage means (404) for storing sender-specific letter format information in which a letter format specific to a sender is defined;
destination address area determining means (405) for determining a destination address area in an area, which is to be processed by the character recognition processing means, based on the sender-specific letter format information stored in the sender-specific letter format information storage means;
sender address area determining means (409) for determining a sender address area in an area, which is to be processed by the character recognition processing means, based on the sender-specific letter format information stored in the sender-specific letter format information storage means; and
sender-specific letter format learning processing means (413) for performing a learning process with respect to the sender-specific letter format information stored in the sender-specific letter format information storage means, based on areas on the image of the first character series and the second character series selected for each of the destination address area and the sender address area by the character image selection processing means.
